# EUROPÄISCHE PATENTSCHRIFT

(11) **EP 3 567 290 B1**
(45) Veröffentlichungstag und Bekanntmachung des Hinweises auf die Patenterteilung: **27.10.2021**
(21) Anmeldenummer: 19173081.1
(22) Anmeldetag: 07.05.2019
(51) Int. Cl.: F16L 11/11, F16L 27/111, F16L 51/02, F16L 55/033

(54) **ÜBERWACHUNGSSYSTEM ZUM ÜBERWACHEN VON BETRIEBSZUSTÄNDEN EINES BEWEGLICHEN BAUTEILS**
MONITORING SYSTEM FOR MONITORING THE OPERATING STATES OF A MOVABLE COMPONENT
SYSTÈME DE SURVEILLANCE PERMETTANT DE SURVEILLER LES ÉTATS DE FONCTIONNEMENT D'UN COMPOSANT EN MOUVEMENT

(30) Priorität: 08.05.2018 DE 102018111020; 08.05.2018 DE 102018111019; 08.05.2018 DE 102018111024
(43) Veröffentlichungstag der Anmeldung: 13.11.2019
(73) Patentinhaber: Witzenmann GmbH, 75175 Pforzheim (DE)
(72) Erfinder: Kämpfe, Andreas, 75173 Pforzheim (DE); Kunkis, Marius, 76199 Karlsruhe (DE); Marx, Michael, 75031 Eppingen (DE); Poschmann, Markus, 76135 Karlsruhe (DE); Rothfuß, Daniel, 75334 Straubenhardt (DE); Seckner, Marc, 76149 Karlsruhe (DE); Weber, Matthias, 75015 Bretten (DE)
(74) Vertreter: Lemcke, Brommer & Partner Patentanwälte Partnerschaft mbB

(56) Entgegenhaltungen:
- EP-A1- 2 270 379
- WO-A1-2013/120459
- CN-U- 206 175 925
- DE-A1-102012 102 506
- DE-A1-102013 013 299
- DE-A1-102013 013 365

## Beschreibung

### Beschreibung

Die Erfindung betrifft ein Überwachungssystem zum Überwachen von Betriebszuständen eines beweglichen Bauteils aus Metall zum Ausgleich von In-Sich-Bewegungen einer Leitung für Fluide, wobei das bewegliche Bauteil insbesondere längenveränderlich und/oder angular beweglich und/oder axial beweglich und/oder lateral beweglich ist und vorzugsweise in Form eines flexiblen Leitungselements mit mindestens einem Abschnitt aus einem gewellten und/oder gewickelten und/oder aus einem durch beweglich ineinander gesteckte Segmente gebildeten Metallrohr vorliegt, in einer Industrieanlage in eine feste Verrohrung zum Durchleiten von Fluiden eingebaut sowie insbesondere als Kompensator ausgestaltet ist.

Die DE102013013299 offenbart eine Prozessanlage mit einem Sensor der mit einem übergeordneten Datenverarbeitungssystem verbunden ist. Das Datenverarbeitungssystem ist mit einer Bedieneinheit verbunden. Die Bedieneinheit umfasst eine Anzeige- und Eingabeeinheit.

Bewegliche Bauteile der vorliegenden Art dienen dazu, betriebsbedingte Relativbewegungen, insbesondere Biegungen und Längenänderungen von starren oder weniger flexiblen Fluidleitungen aufzunehmen. Dies verhindert Beschädigungen der Fluidleitungen. Typische Bewegungen von Leitungen für Fluide sind temperaturbedingte Längenänderungen, Bewegungen durch Druckstöße des Fluids, Schwingungen in der Leitung, Setzungen und Ermüdungsbewegungen bei Fundamenten und Halterungen, planmäßige Verschiebe- oder Schwenkbewegungen und dergleichen mehr.

Bewegliche Bauteile in Form von beweglichen Aufhängungen oder Stützen enthalten oft eine federnde Kolben-Zylinder-Einheit, eine Gasfeder oder eine Torsionsfeder, und sie sorgen dafür, dass Axial-, Lateral- oder Angularbewegungen der Rohrleitung in gewissen Grenzen möglich sind, um beispielsweise Wärmeausdehnungseffekte zu kompensieren. Insbesondere sorgen sie auch dafür, dass Schwingungen, beispielsweise aufgrund von Druckpulsen im durchgeleiteten Fluid, oder Vibrationen nicht zu einer Beschädigung der Befestigungspunkte der fluidführenden Rohrleitung führen.

Flexible Leitungselemente als bewegliche Bauteile der vorliegenden Art zeichnen sich in der Regel durch ihre Flexibilität, also die Fähigkeit, äußere Belastung durch Längenänderung oder Biegung bei uneingeschränkter Leitungsfunktion aufzunehmen, durch ihre Ermüdungsfestigkeit, ihre Druckfestigkeit, ihre Dichtheit, ihre Temperaturbeständigkeit und ihre weitgehende Wartungsfreiheit aus. Daher werden sie häufig in Leitungen eingesetzt, die umweltgefährliche, gesundheitsgefährdende Fluide, oder Gase bzw. Flüssigkeiten mit hohen oder sehr tiefen Temperaturen oder mit hohen Drücken transportieren. Dementsprechend ist die uneingeschränkte Funktionsfähigkeit eines solchen flexiblen Leitungselements sicherheitsrelevant. Gleichzeitig ist das flexible Leitungselement in einer Fluidleitung aufgrund seiner Beweglichkeit in der Regel das schwächste Glied in der Leitung und zuerst von Undichtigkeiten oder gar einem Ausfall betroffen.

Es ist daher in der Regel notwendig, insbesondere flexible Leitungselemente, aber auch sonstige bewegliche Bauteile der vorliegenden Art regelmäßig zu inspizieren sowie oft aus Sicherheitsgründen in vorgegebenen Intervallen zu tauschen. Bei besonders sicherheitsrelevanten Anwendungen kommt es vor, dass die beweglichen Bauteile durch Messgeräte überwacht werden, die eine eventuelle Überlast, beispielsweise eine zu hohe Temperaturbelastung oder eine zu hohe Druckbelastung, erkennen und einen Alarm auslösen.

Die Auslegung einer Fluidleitung mit einem beweglichen Bauteil der vorliegenden Art erfolgt notwendigerweise mittels typisierter Berechnungen, die nur eine Annäherung an die späteren tatsächlichen Betriebszustände sein können. Dementsprechend muss das bewegliche Bauteil mit Sicherheitszuschlägen konzipiert werden, um nicht im ungünstigen Fall vorzeitig auszufallen.

Es liegt auf der Hand, dass solche Sicherheitszuschläge, aber auch der vorsorglich oft zu frühe Austausch Zusatzkosten generieren, die grundsätzlich vermeidbar wären. Andererseits ist eine engmaschige Inspektion mitunter fehlerbehaftet und, wenn es sich um eine Vielzahl von beweglichen Bauteilen in einer verfahrenstechnischen Industrieanlage handelt, entsprechend aufwändig.

Der vorliegenden Erfindung liegt daher die Aufgabe zugrunde, ein Überwachungssystem zum Überwachen von Betriebszuständen eines beweglichen Bauteils aus Metall zum Ausgleich von In-Sich-Bewegungen einer Leitung für Fluide vorzuschlagen, mit dem solche beweglichen Bauteile effizienter als bisher überwacht werden können, so dass insbesondere ermöglicht wird, weniger aufwändig ausgelegte bewegliche Bauteile verwenden zu können und/oder gegebenenfalls Austauschintervalle für bewegliche Bauteile zu verlängern.

Gelöst ist diese Aufgabe durch ein Überwachungssystem mit den Merkmalen des Patentanspruchs 1. Bevorzugte Ausgestaltungen und Weiterbildungen des erfindungsgemäßen Überwachungssystems sind in den Patentansprüchen 2 bis 15 niedergelegt.

Ein erfindungsgemäßes Überwachungssystem zum Überwachen von Betriebszuständen eines beweglichen Bauteils aus Metall zum Ausgleich von In-Sich-Bewegungen einer Leitung für Fluide umfasst demnach ein bewegliches Bauteil aus Metall, das insbesondere längen-veränderlich und/oder angular beweglich und/oder axial beweglich und/oder lateral beweglich ist,, mindestens ein dem beweglichen Bauteil zugeordnetes und insbesondere direkt oder indirekt am flexiblen Bauteil angeordnetes Messelement zum Erfassen von mindestens einem Zustandsparameter des beweglichen Bauteils und/oder des Fluids und/oder der Umgebung, soweit diese Einfluss auf das bewegliche Bauteil haben, eine Auswerteeinheit zum Sammeln und Auswerten der vom Messelement erfassten und als Messdaten bereitgestellten Zustandsparameter, ein Kommunikationsmodul zum Übertragen der Messdaten an die Auswerteeinheit und eine Cloud-Plattform, mit der die Auswerteeinheit bedarfsweise verbindbar ist. Die Auswerteeinheit ist hierbei so ausgestaltet, dass sie die vom Kommunikationsmodul erhaltenen Messdaten mit Daten aus der Cloud-Plattform abgleicht oder durch solche Daten ergänzt, auswertet und die Ergebnisse als Informationen ausgibt. Alternativ oder zusätzlich bzw. ergänzend lässt die Auswerteeinheit die Messdaten in der Cloud-Plattform auswerten, um dann die Ergebnisse als Informationen auszugeben.

Betriebszustände des beweglichen Bauteils im Sinne der vorliegenden Erfindung sind alle physikalisch messbaren Zustandsparameter, wie insbesondere die Temperatur, Temperaturschwankungen, Innen- und Außendrücke, Druckdifferenzen, Druckschwankungen und Druckpulse innerhalb eines flexiblen Leitungselements, Schwingungen und deren Frequenzen, Materialspannungen, Bewegungen, Bewegungszyklen, Auslenkungen, Beschleunigungen, Durchflussgeschwindigkeiten, Ablagerungen im Bauteil und dergleichen mehr. Diese Zustandsparameter können von entsprechenden Messelementen erfasst werden, wie beispielsweise Temperaturmessfühlern, Druckmessfühlern, Dehnmessstreifen, optischen Detektoren etc.

Die Auswerteeinheit kann ein Gerät sein, wie beispielsweise ein Tablet-Computer oder ein Auswertecomputer, sie kann jedoch auch als Softwaremodul, beispielsweise in einem zentralen Steuerungscomputer einer Anlage ausgeführt sein. Das Kommunikationsmodul ist vorzugsweise ein Transmitter oder Transceiver zur drahtlosen Übertragung der Messdaten an die Auswerteeinheit.

Die Cloud-Plattform, mit der die Auswerteeinheit erfindungsgemäß bedarfsweise verbindbar ist, wird vorzugsweise vom Hersteller des beweglichen Bauteils oder vom Anbieter der kompletten Fluidleitung bereitgestellt und ermöglicht den Zugriff auf aktuelle Daten über Zusammenhänge zwischen gemessenen Zustandsparametern und dem Verschleiß bzw. der Restlebensdauer für ein spezifisches bewegliches Bauteil, oder Zusammenhänge zwischen gemessenen Zustandsparametern und kritischen Betriebszuständen, die einen Eingriff erfordern und dergleichen mehr. Wenn die Auswerteeinheit, was im Rahmen der vorliegenden Erfindung bevorzugt ist, Messdaten oder Ergebnisse in die Cloud-Plattform zurückmeldet, kann diese die zum Abruf bereitgestellten Daten verifizieren und gegebenenfalls anpassen. Wenn eine Vielzahl von Auswerteeinheiten, insbesondere bei unterschiedlichen Anwendern, auf dieselbe Cloud-Plattform zugreifen und Daten an diese rückmelden, kann die Cloud-Plattform auf einer breiten Datenbasis laufend aktualisiert und verbessert werden.

Insbesondere wenn ein flexibles Leitungselement als bewegliches Bauteil in einer Industrieanlage in eine feste Verrohrung zum Durchleiten von Fluiden eingebaut und vorzugsweise als Kompensator ausgestaltet ist, bietet die Erfindung besondere Vorteile. Denn in solchen Anlagen sind die flexiblen Leitungselemente oft schwer zugänglich und liegen weit entfernt auseinander, so dass eine regelmäßige Inspektion besonders aufwändig ist. Der vorzeitige Ausfall oder eine Beschädigung eines flexiblen Leitungselements wirkt sich auf die gesamte Anlage aus, so dass dies zu vermeiden ist. Eine kontinuierliche Überwachung mit dem erfindungsgemäßen Überwachungssystem ermöglicht hier mit besonderen Vorteilen, flexible Leitungselemente nicht mit besonders hohen Sicherheitszuschlägen, beispielsweise in der Wandstärke des gewellten Metallrohrs oder bei zusätzlichen stabilisierenden Bauteilen, wie einem Anker eines Kompensators versehen zu müssen.

Das erfindungsgemäße Überwachungssystem ermöglicht darüber hinaus eine laufende Dokumentation der Betriebszustände, was beispielsweise bei einem Ausfall oder einer Beschädigung eines beweglichen Bauteils eine Schadensanalyse ermöglicht. Diese fließt gegebenenfalls dann auch wieder in die auf der Cloud-Plattform abrufbaren Daten ein.

Vor allem in einer Industrieanlage können Zustandsparameter eines beweglichen Bauteils zudem dazu verwendet werden, die Verrohrung auszurichten, beispielsweise indem ein flexibles Leitungselement eine ungünstige Winkellage meldet.

Darüber hinaus ist es möglich, durch die erfindungsgemäße Überwachung langfristige Bewegungen eines beweglichen Bauteils innerhalb der Fluidleitung, wie Ermüdungsbewegungen, Setzungen, Veränderungen einer Aufhängung, allmähliche Verschiebebewegungen, Auslenkungen und dergleichen mehr im Rahmen eines Bauteilmonitorings zu erkennen und/oder zu protokollieren.

Durch die fortlaufende Überwachung mit einem erfindungsgemäßen Überwachungssystem können Wartungs- und Austauschintervalle für die beweglichen Bauteile in einer Industrieanlage so geplant werden, dass diejenigen beweglichen Bauteile, von denen zu erwarten ist, dass sie bis zum nächsten Wartungsintervall nicht mehr fehlerlos funktionieren werden, gleich mit ausgetauscht werden. Dies erhöht die Anlagenverfügbarkeit.

Das mindestens eine Messelement des erfindungsgemäßen Überwachungssystems ist erfindungsgemäß zum Erfassen von solchen Zustandsparametern vorgesehen, die Einfluss auf die Lebensdauer des beweglichen Bauteils haben. Dies sind insbesondere die Anzahl der Lastspiele, die vom beweglichen Bauteil durchlaufen worden sind, sonstige Bewegungen, Druckspitzen eines durchgeleiteten Fluids, Vibrationsbelastungen, Temperaturbelastungen und dergleichen mehr. Die Auswerteeinheit rechnet dann die erhaltenen Messdaten nach einem Algorithmus, oder durch Einwählen in die Cloud-Plattform, in Schädigungsäquivalente um, addiert diese auf und errechnet daraus eine Prognose für die Restlebensdauer des beweglichen Bauteils, die es als Ergebnis ausgibt. Hierzu gleicht die Auswerteeinheit die Messdaten mit Daten aus der Cloud-Plattform ab oder ergänzt die Messdaten durch Daten aus der Cloud-Plattform, wie insbesondere Standardberechnungsdaten von einschlägigen Normen. Vorteilhaft ist jedoch auch ein Abgleich mit empirischen Datensammlungen zu einem spezifischen beweglichen Bauteil.

Am Beispiel einer Bewegung eines flexiblen Leitungselements in Form eines Lastspiels, also einem vollständigen Durchlauf einer bestimmten Bewegungsstrecke, beispielsweise in Längsrichtung des Leitungselements, kann dieses Konzept verdeutlicht werden: Sobald das erfindungsgemäße Überwachungssystem feststellt, dass ein flexibles Leitungselement ein Lastspiel durchlaufen hat, wird unter Berücksichtigung der Randbedingungen, wie Druck und Temperatur, ein Schädigungsäquivalent durch dieses Lastspiel festgelegt und mit vergangenen Schädigungsäquivalenten addiert. Hierbei ist ein Schädigungsäquivalent beispielsweise 0,0001% der Ziellastspielzahl, d.h. der garantierten Lebensdauer des flexiblen Leitungselements. Das Aufaddieren erfolgt entweder laufend oder in Zeitintervallen, so dass die Auswerteeinheit dann jeweils die voraussichtliche Restlaufleistung bzw. Restlaufzeit des flexiblen Leitungselements prognostizieren kann. Dies kann dazu führen, dass der Anlagenbetreiber laufend detailliert informiert wird, oder zu gegebener Zeit eine Warnung erhält, dass zum nächsten turnusmäßigen Wartungstermin der Anlage ein Austausch dieses spezifischen flexiblen Leitungselements nötig werden wird. Dies erhöht nicht nur die Anlagenverfügbarkeit, sondern ermöglicht auch eine bessere Planung von Wartungsund Austauschintervallen und ermöglicht beispielsweise auch aufgrund der Restlaufzeitprognose, ein flexibles Leitungselement dann auszutauschen, wenn ohnehin ein Anlagenstillstand ansteht.

Prognosen über die Restlebensdauer eines beweglichen Bauteils aufgrund der laufenden Überwachung mittels eines erfindungsgemäßen Überwachungssystems verbessern schließlich auch das Risikomanagement bei sicherheitsrelevanten Anwendungen.

Das erfindungsgemäße Überwachungssystem ermöglicht außerdem dann, wenn mehrere Zustandsparameter des beweglichen Bauteils laufend überwacht werden, für einen routinemäßigen oder notwendig gewordenen Austausch eines beweglichen Bauteils festzustellen, welche Eigenschaften des beweglichen Bauteils während der Einsatzdauer möglicherweise gar nicht zum Tragen gekommen sind. Beispielsweise werden Kompensatoren oft mit Ankern zur Stabilisierung ausgestattet. Wenn die vom Überwachungssystem gesammelten Daten ergeben, dass die Ankerbelastung im Betrieb nur gering oder gar nicht vorhanden war, kann das neu einzubauende flexible Leitungselement ohne einen solchen Anker bereitgestellt werden. Dies spart Material, Gewicht und Bauraum.

Aufgrund der vom erfindungsgemäßen Überwachungssystem erfassten Daten und gegebenenfalls Prognosen zur Restlebensdauer eines beweglichen Bauteils kann schließlich auch eine weitgehend automatisierte Ersatzteil-Nachbestellung über die Cloud-Plattform erfolgen.

Die Auswerteeinheit des erfindungsgemäßen Überwachungssystems gibt die Ergebnisse und/oder Warnhinweise bei Überlast oder Fehlfunktion des beweglichen Bauteils vorzugsweise an ein Internet-Portal oder Intranet-Portal sowie gegebenenfalls alternativ oder zusätzlich an ein mobiles Endgerät aus, insbesondere an einen Tablet-Computer oder ein Smartphone. Letzteres optimiert eine Alarmfunktion des Überwachungssystems, da Warnhinweise direkt an ein mobiles Endgerät einer zuständigen Person, vorzugsweise als Push-Nachricht gesendet werden. Diese bevorzugte Ausgestaltung des erfindungsgemäßen Überwachungssystems ermöglicht darüber hinaus jedoch auch eine Echtzeitdarstellung der erfassten Zustandsparameter auf einem Rechner, via Internet oder Intranet, oder auf einem mobilen Endgerät, und zwar vorzugsweise mit unterlegten Simulations-Darstellungen. Sinnvolle Zustandsparameter sind hierbei der aktuell gemessene Durchfluss durch ein flexibles Leitungselement, die Temperatur des Fluids und/oder des Leitungselements, der momentan herrschende Druck, Vibrationen und dergleichen mehr.

Als weitere bevorzugte Ausgestaltung des erfindungsgemäßen Überwachungssystems kann die Auswerteeinheit die Ergebnisse und/oder Warnhinweise an eine Anlagensteuerung der Anlage ausgeben, in der das Überwachungssystem implementiert ist. Dies ermöglicht nicht nur eine allgemeine Betriebsdatenüberwachung, wobei z. B. Druckstöße in der Fluidleitung erkannt und protokolliert werden; die vom Überwachungssystem gemeldeten Ergebnisse können auch komplett in die Steuerungstechnik der Anlage eingebunden werden und zur Regelung von Betriebsabläufen verwendet werden.

Eine weitere bevorzugte Ausgestaltung des erfindungsgemäßen Überwachungssystems besteht darin, dass die Auswerteeinheit und/oder die Cloud-Plattform anhand von Messdaten zu einem beweglichen Bauteil, die im Wesentlichen bis zu dessen Austausch protokolliert worden sind, eine Analyse der für dieses bewegliche Bauteil gegebenen Randbedingungen und durchlaufenen Betriebszuständen durchführen. Aus dieser Analyse können dann Hinweise generiert werden, welche Eigenschaften des beweglichen Bauteils verbesserungsbedürftig und welche Eigenschaften gar nicht notwendig sind. Die Auslegung des beweglichen Bauteils können somit durch die Logdaten des Überwachungssystems für spezifische Einsatzzwecke optimiert werden. Mit solchen Logdaten ist auch, wie oben bereits erwähnt, eine Schadensanalyse bei etwaigen Schäden des beweglichen Bauteils möglich. Jedenfalls kann ein Ersatzbauteil, das für ein auszutauschendes bewegliches Bauteil eingebaut werden soll, anhand der Logdaten des auszutauschenden Bauteils spezifisch angepasst werden, was insbesondere etwaige sich als unnötig herausgestellte Sicherheitszuschläge betrifft.

Ein Zusatznutzen von solchen Logdaten besteht darin, dass auch die Bestellung eines Ersatzteils vereinfacht werden kann, wenn die Auswerteeinheit und/oder die Cloud-Plattform anhand von Logdaten eines beweglichen Bauteils eine Analyse der für dieses bewegliche Bauteil gegebenen Randbedingungen und durchlaufenen Betriebszuständen durchführen und daraus eine Spezifikation der Solleigenschaften eines Ersatzteils errechnen. Das Ersatzteil kann hierdurch für den ganz speziellen Einsatzzweck "maßgeschneidert" werden. Die Vorteile gegenüber einer Auslegung des Ersatzteils anhand von allgemeinen Erfahrungswerten und Normen liegt auf der Hand.

Die Cloud-Plattform wird vorzugsweise beim Hersteller des beweglichen Bauteils bereitgestellt, und die Auswerteeinheit kann dann via Internet mit der Cloud-Plattform kommunizieren. Dies hat den Vorteil, dass die Cloud-Plattform Messdaten, die von einer Mehrzahl von beweglichen Bauteilen aus unterschiedlichen Anwendungen stammen, und die von der jeweiligen Auswerteeinheit daraus generierten Ergebnisse als Feldversuchsdaten verwenden kann. Anhand statistischer Berechnungen können dann Korrekturwerte für die Auslegung von künftig herzustellenden beweglichen Bauteilen errechnet werden.

Ein im erfindungsgemäßen Überwachungssystem eingesetztes bewegliches Bauteil aus Metall zum Ausgleichen bzw. Aufnehmen von In-Sich-Bewegungen einer Leitung für Fluide, insbesondere einer fluidführenden Rohrleitung, kann eine Messvorrichtung für einen momentanen Wert eines Zustandsparameters eines momentanen Betriebszustands des beweglichen Bauteils aufweisen. Diese Messvorrichtung besteht vorzugsweise im Wesentlichen aus einer digitalen Wiedergabe- und/oder Übertragungseinheit für digital erfasste Messdaten von Zustandsparametern, wobei eine Erfassung der Zustandsparameter und die Generierung von digitalen Messdaten über digitale Sensoren und/oder über analoge Sensoren mit nachgeschaltetem Analog-Digital-Wandler erfolgt.

Die Funktionseinheit "Messvorrichtung" wird umfassend verstanden; diese kann im Sinne der Erfindung eine Wiedergabeeinheit sein, die direkt ablesbar ist und direkt am Bauteil oder separat, in der Nähe des Bauteils angeordnet ist. Alternativ oder auch zusätzlich kann es sich bei der Messvorrichtung um eine Übertragungseinheit handeln, welche die digital erfassten Messdaten von Zustandsparametern an eine nicht zum beweglichen Bauteil gehörende Empfangsstation überträgt, beispielsweise eine zentrale Steuerung einer Industrieanlage, wobei die Übertragungseinheit gegebenenfalls nicht mittels Augenschein ablesbar ist, sondern nur mit technischen Hilfsmitteln, wie eben einer Empfangsstation, welche die digitalen Messdaten oder Ergebnisse einer Auswertung dieser digitalen Messdaten erkennbar macht.

Die digitalen Sensoren oder die Analog-Digital-Wandler, die zur Generierung der digitalen Messdaten notwendig sind, benötigen in der Regel eine elektri-sche Energieversorgung. Dies kann neben langlebigen Batterien oder gegebenenfalls Solarzellen auch dadurch erfolgen, dass etwa in der Leitung bzw. Rohrleitung auftretende Temperaturdifferenzen benutzt werden, um über einen thermoelektrischen Generator elektrischen Strom zu erzeugen. Wenn Vibrationsbewegungen vorhanden sind, können diese ebenfalls zur Erzeugung von elektrischem Strom verwendet werden. Wenn es sich beim beweglichen Bauteil um ein flexibles Leitungselement handelt, durch das ein Fluid strömt, kann auch die Strömungsenergie des Fluids zur Gewinnung von elektrischer Energie für die Versorgung der digitalen Sensoren oder eines Analog-Digital-Wandlers verwendet werden.

Mit der erfindungsgemäßen Messvorrichtung ist es möglich, verschiedenste Zustandsparameter von momentanen Betriebszuständen des beweglichen Bauteils zu überwachen. Hierzu zählen neben der Auslenkung bzw. Verschiebungsstrecke auch die Temperatur, Spannungen im Material (beispielsweise mittels Dehnmessstreifen detektiert), Vibrationen, Beschleunigungen sowie, wenn es sich beim beweglichen Bauteil um ein flexibles Leitungselement handelt, der Druck und die Durchflussgeschwindigkeit des durchgeleiteten Fluids sowie gegebenenfalls auch Ablagerungen im Bauteil, wie beispielsweise Kondensat oder Verschlackungen.

Die Wiedergabe- und/oder Übertragungseinheit, die die Messvorrichtung des erfindungsgemäßen beweglichen Bauteils bildet, ist vorzugsweise als Sender zum drahtlosen Übertragen von Messdaten ausgebildet, der am beweglichen Bauteil oder in der Nähe des beweglichen Bauteils angeordnet ist.

Insbesondere kann eine solche Wiedergabe- und/oder Übertragungseinheit zweiteilig ausgebildet sein und außer dem Sender zum drahtlosen Übertragen von Messdaten auch ein vom beweglichen Bauteil beabstandetes, drahtlos mit dem Sender kommunizierendes Gerät zum Verarbeiten und/oder Darstellen von digitalen Messdaten, umfassen. Ein solcher Sender ermöglicht, die digitalen Messdaten nicht nur in die unmittelbare Umgebung des beweglichen Bauteils, sondern auch an beispielsweise eine zentrale Steuerung einer Industrieanlage zu senden.

Wenn der Sender zum drahtlosen Übertragen von Messdaten in der Nähe des beweglichen Bauteils angeordnet ist, kann dieser über eine Signalleitung oder drahtlos mit den digitalen Sensoren am beweglichen Bauteil kommunizieren. Beides spart Bauraum in der unmittelbaren Umgebung des beweglichen Bauteils und beides ist auch dann leicht zu realisieren, wenn das bewegliche Bauteil von einer Isolierung umgeben ist.

Eine besonders vorteilhafte Weiterbildung der vorliegenden Erfindung besteht darin, dass die die erfindungsgemäße Messvorrichtung bildende Wiedergabe- und/oder Übertragungseinheit als Sender und als Empfänger zum drahtlosen Übertragen von digitalen Daten ausgebildet ist. Sie ist in diesem Fall am beweglichen Bauteil angeordnet und dient neben dem Übertragen von Messdaten auch zum Empfangen von Steuerungsdaten, während das bewegliche Bauteil mit Aktoren versehen ist, die die Steuerungsdaten in Bewegungen umsetzen. Hierdurch können Federvorspannungen, Winkellagen, Dämpfungen und dergleichen mehr aktiv verändert werden, und zwar vorzugsweise mittels Fernzugriff, beispielsweise aus der zentralen Steuerung einer Industrieanlage heraus.

Ein bewegliches Bauteil für das erfindungsgemäße Überwachungssystem, das einen digital auslesbaren elektronischen Datenspeicher und/oder eine Messvorrichtung für einen momentanen Wert eines Zustandsparameters eines momentanen Betriebszustands des beweglichen Bauteils aufweist, kann noch weiter verbessert werden, indem der Datenspeicher und/oder die Messvorrichtung durch Nutzen von Bewegungen des beweglichen Bauteils und/oder durch Nutzbarmachen der Energie eines durch das bewegliche Bauteil geleiteten Fluids und/oder durch Nutzen von Wärmeenergie aufgrund von Temperaturdifferenzen am beweglichen Bauteil mit elektrischer Energie versorgt wird.

Mit der vorliegenden Erfindung kann also eine Messvorrichtung zum Erzeugen von digitalen Messdaten, sowie alternativ oder zusätzlich ein digital auslesbarer elektronischer Datenspeicher am beweglichen Bauteil angeordnet werden, ohne Stromleitungen oder Batterien zur elektrischen Energieversorgung verwenden zu müssen. Die für einen elektronischen Datenspeicher oder eine digitale Messvorrichtung notwendige elektrische Energie wird vielmehr direkt am beweglichen Bauteil und insbesondere unter Nutzung der sich immer wieder ändernden Betriebszustände des beweglichen Bauteils vor Ort erzeugt.

Das erfindungsgemäß verwendete bewegliche Bauteil kann eine längenveränderliche und/oder angular und/oder axial und/oder lateral bewegliche Aufhängung oder Stütze für die fluidführende Leitung sein. Alternativ kann das bewegliche Bauteil ein flexibles Leitungselement zum Einbau in die fluidführende Leitung sein, wobei das flexible Leitungselement ein Metallrohr mit mindestens einem ringgewellten oder wendelförmig gewellten Abschnitt und/oder mit mindestens einem schraubengangförmig gewickelten Abschnitt und/oder mit mindestens einem aus einzelnen gegeneinander beweglichen Segmenten gebildeten Abschnitt aufweist sowie beidseits mit Anschlussstücken und/oder Flanschen zum Einbau in die Rohrleitung versehen ist. Insbesondere kann das flexible Leitungselement ein Kompensator zum Einbau in eine fluidführende Rohrleitung sein.

Wenn das bewegliche Bauteil ein flexibles Leitungselement ist, kann der Datenspeicher und/oder die Messvorrichtung des Bauteils mindestens einen Generator zum Erzeugen elektrischer Energie aus der Strömung des durch das flexible Leitungselement geleiteten Fluids umfassen.

Der Datenspeicher und/oder die Messvorrichtung des beweglichen Bauteils kann daneben auch mindestens ein Element zum Erzeugen elektrischer Energie aus Bewegungen des Bauteils umfassen, beispielsweise aus Vibrationsbewegungen, Auslenkungen bzw. Verschiebungsstrecken, Spannungen im Material, Beschleunigungen und dergleichen mehr, wobei dieses Element insbesondere ein piezoelektrisches Element sein kann.

Besondere Vorteile ergeben sich, wenn der Datenspeicher und/oder die Messvorrichtung des beweglichen Bauteils mindestens einen thermoelektrischen Generator zum Erzeugen elektrischer Energie aus Temperaturschwankungen oder Temperaturdifferenzen am beweglichen Bauteil umfasst. So können etwa in der Rohrleitung auftretende Temperaturdifferenzen oder auch Temperaturschwankungen des durchgeleiteten Fluids zur Erzeugung von elektrischer Energie genutzt werden.

Wenn das bewegliche Bauteil eine digitale Wiedergabe- und/oder Übertragungseinheit für die digitalen Messdaten von Zustandsparametern des beweglichen Bauteils, von Zustandsgrößen eines durch das bewegliche Bauteil geleiteten Fluids oder von im elektronischen Datenspeicher gespeicherten Daten vaufweist, ist zweckmäßigerweise auch diese durch Nutzbarmachen der Energie eines durch das bewegliche Bauteil geleiteten Fluids mit elektrischer Energie versorgbar.

Mehrere Ausführungsbeispiele für ein erfindungsgemäßes Überwachungssystem werden im Folgenden anhand der beigefügten Zeichnungen beschrieben. Es zeigen
- Figur 1: eine Prinzipskizze einer einfachen Ausführung eines erfindungsgemäßen Überwachungssystems zum Überwachen von Betriebszuständen eines als Kompensator ausgestalteten flexiblen Leitungselements 1;
- Figur 2: ein Beispiel für eine Informationsanzeige an der Auswerteeinheit des Überwachungssystems aus Figur 1;
- Figur 3: ein als bewegliche Aufhängung ausgebildetes, erfindungsgemäßes bewegliches Bauteil;
- Figur 4: ein als bewegliche Stütze ausgebildetes, erfindungsgemäßes bewegliches Bauteil;
- Figur 5: ein als flexibles Leitungselement ausgebildetes, erfindungsgemäßes bewegliches Bauteil;
- Figur 6: ein weiteres, als flexibles Leitungselement ausgebildetes, erfindungsgemäßes bewegliches Bauteil.

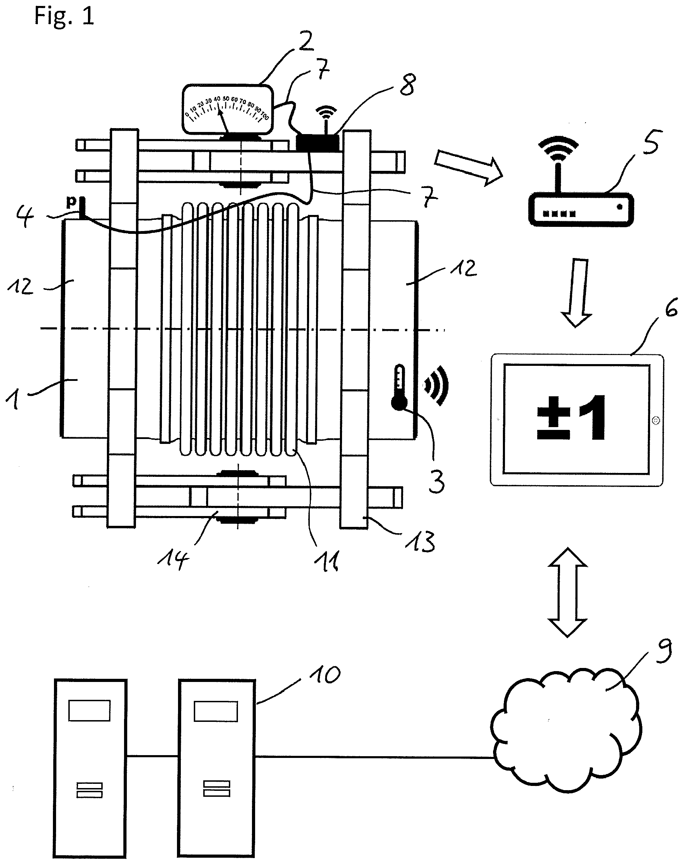

Das in Figur 1 dargestellte Beispiel eines beweglichen Bauteils eines erfindungsgemäßen Überwachungssystems besteht im Wesentlichen aus einem gewellten Metallrohr 11, das an seinen Enden jeweils ein glattzylindrisches Anschlussstück 12 zum Einbau in eine starre Rohrleitung aufweist, sowie einem an den beiden Anschlussstücken 12 befestigten Anker 13 mit zwei Ankergelenken 14, um Angularbewegungen zu ermöglichen. Es handelt sich vorliegend also um einen Angularkompensator.

An einem der Ankergelenke 14 ist ein erstes Messelement 2 angebracht, das die Bewegungen des Ankergelenks detektiert und auch die Winkelstellung misst. An einem der Anschlussstücke 12 des gewellten Metallrohrs 11 ist ein zweites Messelement 3 angebracht, das ein Temperatursensor mit integrierter, kabelloser Datenübertragung ist. Am anderen Anschlussstück 12 sitzt ein drittes Messelement 4, das den Druck des innerhalb des Metallrohrs 11 fließenden Fluids misst. Die ersten, zweiten und dritten Messelemente 2, 3, 4 erfassen die Zustandsparameter Bewegung und Winkellage, Temperatur und Druck und melden die entsprechenden Messdaten an ein Kommunikationsmodul 5, das vorliegend als Transceiver zur drahtlosen Kommunikation ausgestaltet ist.

Das Kommunikationsmodul 5 überträgt die Messdaten drahtlos an eine Auswerteeinheit 6, die vorliegend als Tablet-Computer ausgestaltet ist. Gegebenenfalls ist hier ein Intranet zwischengeschaltet.

Die Messdaten erreichen das Kommunikationsmodul 5 direkt über eine Funkstrecke (zweites Messelement 3), oder mittels Signalleitungen 7 (erstes und drittes Messelement 2, 3) und einen gemeinsamen Sender 8 über eine Funkstrecke. Das Kommunikationsmodul 5 ist zwar vorzugsweise in der Nähe des flexiblen Leitungselements 1 angeordnet, jedoch ist es vorteilhaft, wenn das Kommunikationsmodul 5 die Messdaten drahtlos erhält. Denn oft sind die Rohrleitungen, in die das flexible Leitungselement 1 eingebaut ist, sowie auch das Leitungselement 1 selbst mit Isolierungen umgeben, oder am Ort des flexiblen Leitungselements 1 ist Bauraum äußerst knapp. Im ersteren Fall wäre eine Signalleitung zum Kommunikationsmodul 5 nachteilig, da hierfür die Isolierung durchbrochen werden müsste. In letzteren Fall ist es meist gar nicht möglich, das Kommunikationsmodul 5 direkt am flexiblen Leitungselement 1 anzubringen.

Die Auswerteeinheit 6 verbindet sich bedarfsweise über das Internet 9 mit einer Cloud-Plattform 10, die beim Hersteller des flexiblen Leitungselements 1 vorgehalten wird und entweder die Auswertung auf Anforderung der Auswerteeinheit 6 vornimmt und an die Auswerteeinheit 6 rückmeldet, um die Ergebnisse dort anzuzeigen, oder die Auswerteeinheit 6 bedient sich aktueller Daten aus der Cloud-Plattform 10, um die Auswertung der Messdaten selbst durchzuführen ― wofür gegebenenfalls ein in der Auswerteeinheit vorhandenes Auswerteprogramm durch Kommunikation mit der Cloud-Plattform 10 aktualisiert wird.

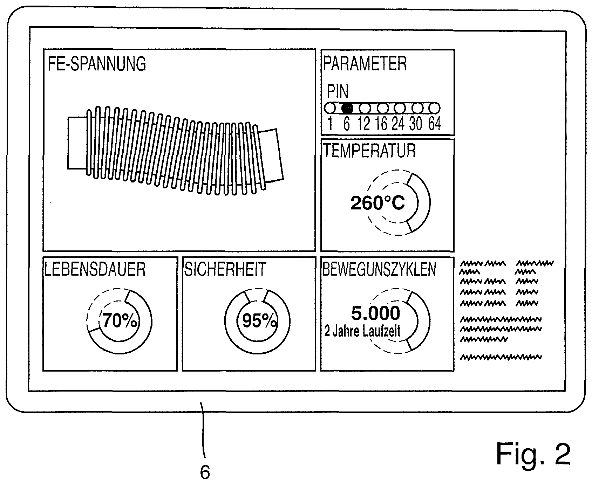

Figur 2 zeigt beispielhaft, wie die Auswerteeinheit 6 Ergebnisse der Auswertung der erhaltenen Messdaten anzeigen könnte. In verschiedenen Fenstern im Display des Tablet-Computers sind die aktuelle Temperatur des flexiblen Leitungselements 1, die absolvierten Bewegungszyklen mit der verstrichenen Zeit seit Inbetriebnahme, die aktuell vorhandenen Sicherheitsreserven sowie eine prognostizierte Restlebensdauer dargestellt, letztere in Form einer Prozentangabe, welcher Anteil der Ziellebensdauer bereits aufgebraucht ist. Die angezeigte Restlebensdauer ist hierbei durch Aufaddieren von Schädigungsäquivalenten errechnet worden.

Im großen Fenster der Auswerteeinheit 6 wird in einer Falschfarbendarstellung gezeigt, wie das gewellte Metallrohr 11 momentan Spannungen unterworfen ist. Diese wurden von der Auswerteeinheit anhand von Finite-Elemente-Simulationsdaten, die von der Cloud-Plattform 10 stammen, auf Basis der Messdaten aus dem zweiten Messelement 2 errechnet.

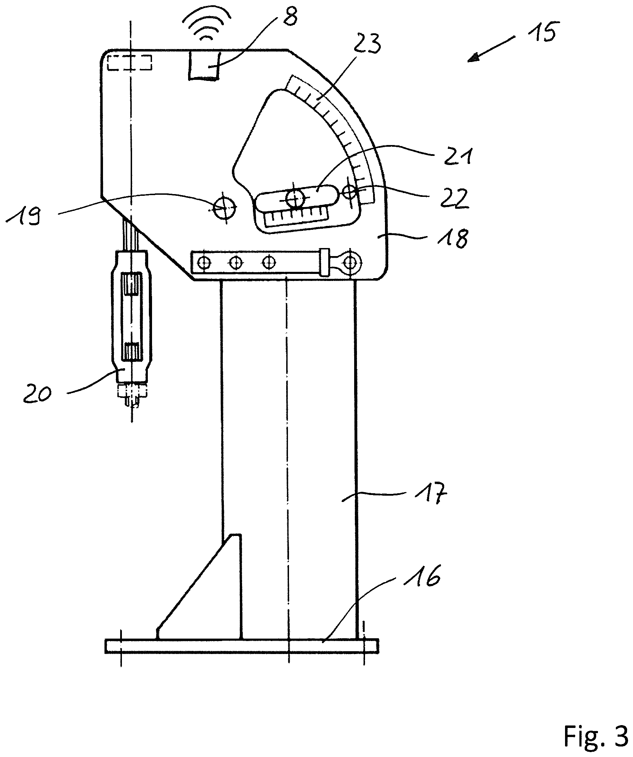

In Figur 3 ist ein erfindungsgemäßes bewegliches Bauteil dargestellt, das als längenveränderliche Aufhängung 15 ausgebildet ist. Diese besteht im Wesentlichen aus einer Basis 16 mit einem Federgehäuse 17 für eine (hier nicht sichtbare) Schraubenfeder, einem Umlenkgehäuse 18, das eine (hier ebenfalls nicht sichtbare), um eine Drehachse 19 bewegliche Gelenkanordnung enthält, sowie einem Spannschloss 20, an das die fluidführende Rohrleitung angehängt wird. Die im Umlenkgehäuse 18 befindliche Gelenkanordnung verbindet das Spannschloss 20 mit der im Federgehäuse 17 sitzenden Schraubenfeder, so dass das Spannschloss 20 im Ergebnis federnd an der Basis 16 befestigt ist und dementsprechend axial beweglich ist.

Im Umlenkgehäuse 18 sitzt außerdem eine Lastjustierung 21, um die Vorspannung der Schraubenfeder einzustellen. An der Gelenkanordnung sitzt ein digitaler Sensor 22 mit einer symbolisch zu verstehenden, analogen Skala 23. Der Sensor 22 detektiert die Stellung bzw. Bewegung der Gelenkanordnung und somit die axiale Lage des Spannschlosses 20 und meldet die ermittelten Werte an einen Sender 8.

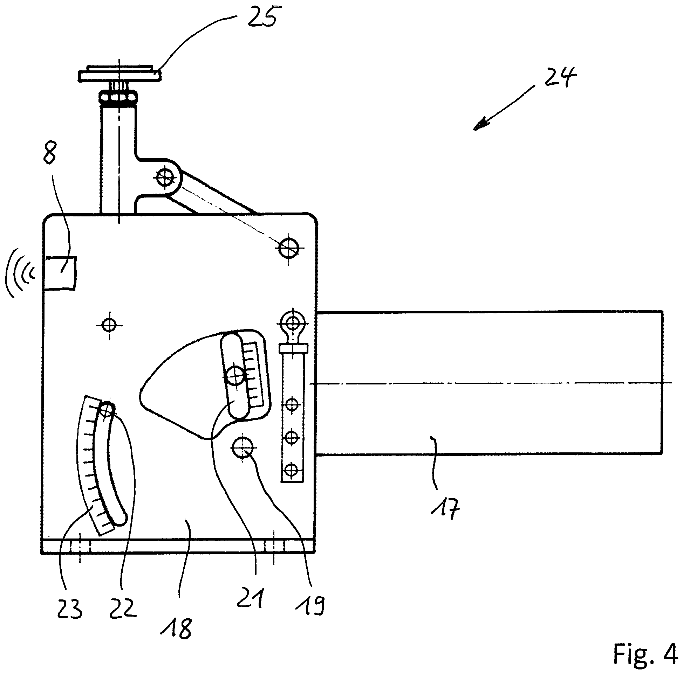

In Figur 4 ist ein erfindungsgemäßes bewegliches Bauteil dargestellt, das als Stütze 24 für eine fluidführende Rohrleitung ausgebildet ist. Die (nicht dargestellte) fluidführende Rohrleitung wird hierbei von einer Tragplatte 25 abgestützt, wobei diese Tragplatte 25 wiederum axial beweglich ist. Dies wird über eine (ebenfalls nicht sichtbare) Gelenkanordnung innerhalb des Umlenkgehäuses 18 bewerkstelligt, die die Tragplatte 25 mit einer (nicht sichtbaren) Schraubenfeder im Federgehäuse 17 gelenkig verbindet. Die Mechanik ist grundsätzlich die gleiche wie im Ausführungsbeispiel aus Figur 3, so dass auch hier eine Lastjustierung 21 vorhanden ist und der Sensor 22 mit der symbolischen Skala 23 ebenfalls an der Gelenkanordnung angebracht ist. Auch hier werden die vom Sensor 22 detektierten Signale an einen Sender 8 weitergegeben.

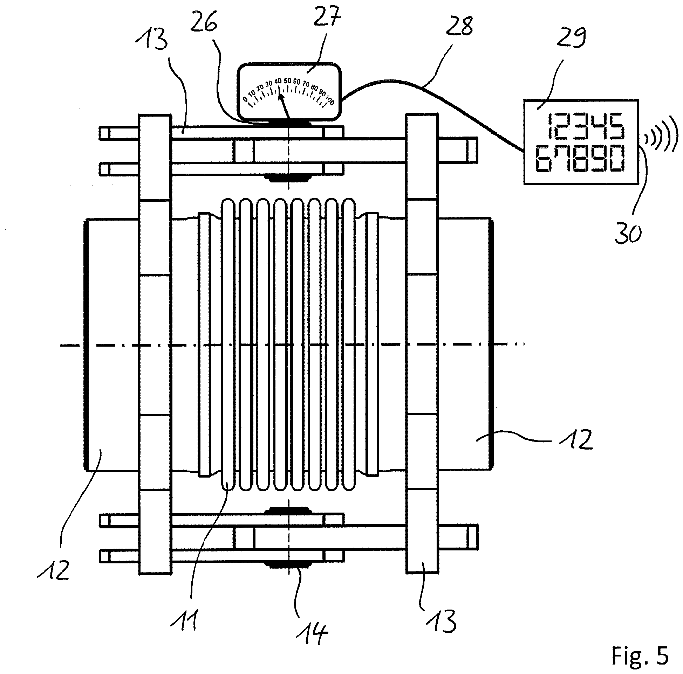

Figur 5 zeigt in einer schematischen Darstellung ein anderes, als flexibles Leitungselement, genauer als Angularkompensator ausgebildetes bewegliches Bauteil.

Dieser Angularkompensator besteht im Wesentlichen aus einem gewellten Metallrohr 11, das an seinen Enden jeweils ein glattzylindrisches Anschlussstück 12 zum Einbau in eine (nicht dargestellte) starre Rohrleitung aufweist, sowie einem an den beiden Anschlussstücken 12 befestigten Anker 13 mit zwei Ankergelenken 14, um Angularbewegungen zu ermöglichen.

An einem der Ankergelenke 14 ist ein digitaler Sensor 26 mit einer lediglich symbolisch zu verstehenden, analogen Skala 27 angebracht. Dieser Sensor 26 detektiert die Winkellage des Ankergelenks 14 und meldet diese über eine Signalleitung 28 an eine Wiedergabe- und Übertragungseinheit 29, die als digitale Anzeige symbolisiert ist, und die gleichzeitig als Sender 30 zum drahtlosen Übertragen von Messdaten an ein Intranet (nicht dargestellt) eines Anlagenbetreibers fungiert.

Die Signalleitung 28 kann hierbei ebenfalls durch eine Funkstrecke ersetzt werden, so dass beispielsweise das flexible Leitungselement mit einer Isolierung versehen werden kann, die dann nicht durchbrochen werden müsste. Die Wiedergabe- und Übertragungseinheit 29 ist zwar in der Nähe des flexiblen Leitungselements angeordnet, jedoch nicht unmittelbar an diesem angebracht. Es liegt auf der Hand, dass dies außerdem den für das flexible Leitungselement benötigten Bauraum vorteilhaft verringert, und dass die Wiedergabe- und Übertragungseinheit 29 mit ihrem Sender 30 etwaigen hohen Temperaturen, die das flexible Leitungselement vom durchgeleiteten Fluid aufnimmt, vorteilhafterweise nicht ausgesetzt ist.

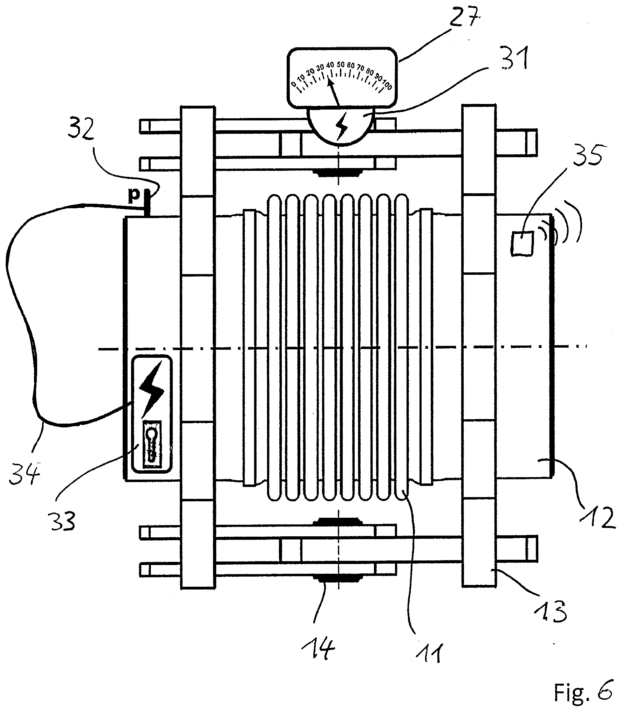

Figur 6 zeigt in einer schematischen Darstellung ein weiteres als flexibles Leitungselement, genauer als Angularkompensator ausgebildetes bewegliches Bauteil.

Dieser Angularkompensator besteht im Wesentlichen wiederum aus einem gewellten Metallrohr 11, das an seinen Enden jeweils ein glattzylindrisches Anschlussstück 12 zum Einbau in eine (nicht dargestellte) starre Rohrleitung aufweist, sowie einer an den beiden Anschlussstücken 12 befestigten Verankerung 13 mit zwei Ankergelenken 14, um Angularbewegungen zu ermöglichen.

An einem der Ankergelenke 14 ist eine erste Messvorrichtung 31 zum Detektieren der Winkellage des Ankergelenks 14 angebracht, was mit einer lediglich symbolisch zu verstehenden analogen Skala 27 verdeutlicht wird. Ein Blitz-Zeichen an der ersten Messvorrichtung 31 symbolisiert, dass dort ein Generator zur Versorgung der ersten Messvorrichtung 31 mit elektrischer Energie verbaut ist, welcher aus den Bewegungen des Ankergelenks 14 elektrische Energie erzeugt.

An einem der glattzylindrischen Anschlussstücke 12 sind eine zweite Messvorrichtung 32 zum Detektieren des Drucks p innerhalb des flexiblen Leitungselements sowie eine dritte Messvorrichtung 33 zum Detektieren der Temperatur am flexiblen Leitungselement und gegebenenfalls der Temperatur innerhalb des flexiblen Leitungselements vorgesehen. Die dritte Messvorrichtung 33 ist, wie auch hier das Blitz-Zeichen symbolisiert, mit einem Generator ausgestattet, der sowohl die dritte Messvorrichtung 33 als auch die zweite Messvorrichtung 32, letztere über eine Leitung 34, mit der notwendigen elektrischen Energie versorgt. Dies kann ein thermoelektrischer Generator sein, der sich Temperaturdifferenzen oder Temperaturschwankungen zu Nutze macht; an dieser Stelle wäre auch ein Generator einsetzbar, der elektrische Energie aus der durch das flexible Leitungselement geleiteten Fluidströmung induktiv erzeugt, beispielsweise mittels einer Kármánschen Wirbelstraße.

Die ersten, zweiten und dritten Messvorrichtungen 31, 32, 33 können mit einem elektronischen Datenspeicher 35 zusammenwirken und digitale Messdaten dort ablegen. Dieser elektronische Datenspeicher 35 ist von außen digital auslesbar, beispielsweise über Nahfeldkommunikation, oder aber der Datenspeicher 35 umfasst auch eine Übertragungseinheit zum Übertragen von insbesondere den digitalen Messdaten an ein (nicht dargestelltes) Intranet eines Anlagenbetreibers oder an das Internet, von wo die Daten beispielsweise an den Bauteilhersteller zurückgemeldet werden können.

## Patentansprüche

1. Überwachungssystem zum Überwachen von Betriebszuständen eines beweglichen Bauteils aus Metall zum Ausgleich von In-Sich-Bewegungen einer Leitung für Fluide, umfassend:
- ein bewegliches Bauteil (1, 15, 24) aus Metall, das insbesondere längenveränderlich und/oder angular beweglich und/oder axial beweglich und/oder lateral beweglich ist, ,
- mindestens ein dem beweglichen Bauteil (1, 15, 24) zugeordnetes Messelement (2, 3, 4) zum Erfassen von mindestens einem Zustandsparameter des beweglichen Bauteils (1, 15, 24) und/oder des Fluids und/oder der Umgebung, soweit diese Einfluss auf das bewegliche Bauteil hat,
- eine Auswerteeinheit (6) zum Sammeln und Auswerten der vom Messelement (2, 3, 4) erfassten und als Messdaten bereitgestellten Zustandsparameter,
- ein Kommunikationsmodul (5) zum Übertragen der Messdaten an die Auswerteeinheit (6),
- und eine Cloud-Plattform (10), mit der die Auswerteeinheit (6) bedarfsweise verbindbar ist,
wobei die Auswerteeinheit (6) so ausgestaltet ist, dass sie die vom Kommunikationsmodul (5) erhaltenen Messdaten mit Daten aus der Cloud-Plattform (10) abgleicht oder durch solche Daten ergänzt, auswertet und die Ergebnisse als Informationen ausgibt und/oder dass sie die Messdaten in der Cloud-Plattform (10) auswerten lässt und die Ergebnisse als Informationen ausgibt,
wobei das mindestens eine Messelement (2, 3, 4) zum Erfassen von solchen Zustandsparametern vorgesehen ist, die Einfluss auf die Lebensdauer des beweglichen Bauteils (1, 15, 24) haben, wie vom beweglichen Bauteil durchlaufene Lastspiele, sonstige Bewegungen, Druckspitzen, Vibrationsbelastungen, Temperaturbelastungen und dergleichen, und wobei die Auswerteeinheit (6) die erhaltenen Messdaten in Schädigungsäquivalente umrechnet, diese aufaddiert und mittels eines Abgleichs mit oder einer Ergänzung durch Daten aus der Cloud-Plattform (10), insbesondere mit Standardberechnungsdaten von einschlägigen Normen und/oder empirischen Datensammlungen, eine Prognose für die Restlebensdauer des beweglichen Bauteils errechnet und als Ergebnis ausgibt.

2. Überwachungssystem nach Anspruch 1, wobei die Auswerteeinheit (6) so ausgestaltet ist, dass sie die Messdaten und/oder Ergebnisse in die Cloud-Plattform (10) zurückmeldet.

3. Überwachungssystem nach einem der Ansprüche 1 oder 2, wobei das bewegliche Bauteil ein flexibles Leitungselement (1) mit mindestens einem Abschnitt aus einem gewellten und/oder gewickelten und/oder aus einem durch beweglich ineinander gesteckte Segmente gebildeten Metallrohr (11) ist und beidseits Anschlussstücke (12) und/oder Flansche zum Einbau in die fluidführende Leitung aufweist.

4. Überwachungssystem nach einem der Ansprüche 1 oder 2, wobei das bewegliche Bauteil eine längenveränderliche und/oder angular bewegliche und/oder axial bewegliche und/oder lateral bewegliche Aufhängung (15) oder Stütze (24) für die Leitung für Fluide ist.

5. Überwachungssystem nach mindestens einem der Ansprüche 1 bis 3, wobei das flexible Leitungselement (1) in einer Industrieanlage in eine feste Verrohrung zum Durchleiten von Fluiden eingebaut und insbesondere als Kompensator ausgestaltet ist.

6. Überwachungssystem nach mindestens einem der Ansprüche 1 bis 5, wobei das System eine Mehrzahl von beweglichen Bauteilen (1, 15, 24) umfasst.

7. Überwachungssystem nach mindestens einem der Ansprüche 1 bis 6, wobei das Kommunikationsmodul (5) ein Transmitter oder Transceiver zur drahtlosen Übertragung der Messdaten an die Auswerteeinheit (6) ist.

8. Überwachungssystem nach mindestens einem der Ansprüche 1 bis 7, wobei die Auswerteeinheit (6) so ausgestaltet ist, dass sie dann, wenn sie aufgrund eines Abgleichs der Messdaten mit Daten aus der Cloud-Plattform (10) eine Überlast oder Fehlfunktion des beweglichen Bauteils feststellt, dies als Warnhinweis ausgibt.

9. Überwachungssystem nach mindestens einem der Ansprüche 1 bis 8, wobei die Auswerteeinheit (6) die Ergebnisse und/oder Warnhinweise an ein Internet- oder Intranet-Portal und/oder an ein mobiles Endgerät ausgibt.

10. Überwachungssystem nach mindestens einem der Ansprüche 1 bis 9, wobei die Auswerteeinheit (6) die Ergebnisse und/oder Warnhinweise an eine Anlagensteuerung einer Anlage ausgibt, in der das Überwachungssystem implementiert ist.

11. Überwachungssystem nach mindestens einem der Ansprüche 1 bis 10, wobei die Auswerteeinheit (6) und/oder die Cloud-Plattform (10) anhand von bis im Wesentlichen zu dessen Austausch protokollierten Messdaten eines beweglichen Bauteils eine Analyse der für dieses bewegliche Bauteil gegebenen Randbedingungen und durchlaufenen Betriebszuständen durchführen und Hinweise ausgeben, welche Eigenschaften des beweglichen Bauteils verbesserungsbedürftig und welche Eigenschaften nicht notwendig sind.

12. Überwachungssystem nach mindestens einem der Ansprüche 1 bis 11, wobei die Auswerteeinheit (6) und/oder die Cloud-Plattform (10) anhand von bis im Wesentlichen zu dessen Austausch protokollierten Messdaten eines beweglichen Bauteils eine Analyse der für dieses bewegliche Bauteil gegebenen Randbedingungen und durchlaufenen Betriebszuständen durchführen und daraus eine Spezifikation der Solleigenschaften eines Ersatzteils errechnen.

13. Überwachungssystem nach mindestens einem der Ansprüche 1 bis 12, wobei die Cloud-Plattform (10) beim Hersteller des beweglichen Bauteils bereitgestellt wird und die Auswerteeinheit (6) via Internet (9) mit der Cloud-Plattform (10) kommuniziert.

14. Überwachungssystem nach Anspruch 13, wobei die Cloud-Plattform (10) die von einer Mehrzahl von beweglichen Bauteilen stammenden Messdaten und die von der Auswerteeinheit (6) daraus generierten Ergebnisse als Feldversuchsdaten verwendet und anhand statistischer Berechnungen Korrekturwerte für die Auslegung von künftig herzustellenden beweglichen Bauteilen errechnet.

## Claims

1. Monitoring system for monitoring operating states of a movable component made of metal for compensating for inherent movements of a pipe for fluids, comprising:
- a movable component (1, 15, 24) made of metal, which is especially variable in length and/or angularly movable and/or axially movable and/or laterally movable,
- at least one measuring element (2, 3, 4), which is assigned to the movable component (1, 15, 24), for detecting at least one state parameter of the movable component (1, 15, 24) and/or of the fluid and/or of the environment, insofar as the latter affects the movable component,
- an analysis unit (6) for collecting and analysing the state parameters that are detected by the measuring element (2, 3, 4) and are provided as measurement data,
- a communication module (5) for transmitting the measurement data to the analysis unit (6),
- and a cloud platform (10) with which the analysis unit (6) is connectible as required,
wherein the analysis unit (6) is configured so that it compares the measurement data received from the communication module (5) with data from the cloud platform (10) or supplements the measurement data by such data, analyses it and outputs the results as information and/or it effects analysis of the measurement data in the cloud platform (10) and outputs the results as information,
wherein the at least one measuring element (2, 3, 4) is provided for detecting those state parameters which affect the service life of the movable component (1, 15, 24), such as load cycles completed by the movable component, other movements, pressure peaks, vibration loads, temperature loads and the like, and wherein the analysis unit (6) converts the received measurement data into damage equivalents, adds them up and, by comparison with or supplementation by data from the cloud platform (10), especially using standard calculation data of relevant standards and/or empirical data collections, calculates a prognosis for the residual service life of the movable component and outputs that prognosis as result.

2. Monitoring system according to claim 1, wherein the analysis unit (6) is configured so that it reports back the measurement data and/or results to the cloud platform (10).

3. Monitoring system according to either one of claims 1 and 2, wherein the movable component is a flexible pipe element (1) having at least one portion made from a corrugated and/or wound metal tube (11) and/or from a metal tube formed by segments movably inserted one inside the other, and has connection pieces (12) and/or flanges at both ends for incorporation into the fluid-conducting pipe.

4. Monitoring system according to either one of claims 1 and 2, wherein the movable component is a variable-length and/or angularly movable and/or axially movable and/or laterally movable mounting (15) or support (24) for the pipe for fluids.

5. Monitoring system according to at least one of claims 1 to 3, wherein the flexible pipe element (1) is installed in fixed pipework for conducting fluids in an industrial plant and is especially configured as a compensator.

6. Monitoring system according to at least one of claims 1 to 5, wherein the system comprises a plurality of movable components (1, 15, 24).

7. Monitoring system according to at least one of claims 1 to 6, wherein the communication module (5) is a transmitter or transceiver for wireless transmission of the measurement data to the analysis unit (6).

8. Monitoring system according to at least one of claims 1 to 7, wherein the analysis unit (6) is configured so that when, on the basis of a comparison of the measurement data with data from the cloud platform (10), it ascertains an overload or malfunction of the movable component, it outputs this as an alert.

9. Monitoring system according to at least one of claims 1 to 8, wherein the analysis unit (6) outputs the results and/or alerts to an internet or intranet portal and/or to a mobile terminal.

10. Monitoring system according to at least one of claims 1 to 9, wherein the analysis unit (6) outputs the results and/or alerts to a plant controller of a plant in which the monitoring system has been implemented.

11. Monitoring system according to at least one of claims 1 to 10, wherein on the basis of measurement data of a movable component logged up until essentially its replacement, the analysis unit (6) and/or the cloud platform (10) carry out an analysis of the boundary conditions existing for that movable component and of operating states through which it has passed and output information as to which properties of the movable component are in need of improvement and which properties are not necessary.

12. Monitoring system according to at least one of claims 1 to 11, wherein on the basis of measurement data of a movable component logged up until essentially its replacement, the analysis unit (6) and/or the cloud platform (10) carry out an analysis of the boundary conditions existing for that movable component and of operating states through which it has passed and on that basis calculate a specification of the desired properties of a replacement part.

13. Monitoring system according to at least one of claims 1 to 12, wherein the cloud platform (10) is provided by the manufacturer of the movable component and the analysis unit (6) communicates with the cloud platform (10) via the internet (9).

14. Monitoring system according to claim 13, wherein the cloud platform (10) uses the measurement data originating from a plurality of movable components and the results generated therefrom by the analysis unit (6) as field test data and, on the basis of statistical calculations, calculates correction values for the design of movable components to be produced in future.

## Revendications

1. Système de surveillance conçu pour surveiller des états de fonctionnement d'une pièce structurelle mobile en métal, en vue de compenser des mouvements intrinsèques d'une conduite dédiée à des fluides, incluant
- une pièce structurelle mobile (1, 15, 24) en métal, notamment de longueur variable et/ou apte à se mouvoir angulairement et/ou axialement et/ou latéralement,
- au moins un élément de mesure (2, 3, 4), affecté à la pièce structurelle mobile (1, 15, 24), en vue de détecter au moins un paramètre d'état de ladite pièce structurelle mobile (1, 15, 24) et/ou du fluide et/ou de l'espace environnant dès lors que ces derniers exercent une influence sur ladite pièce structurelle mobile,
- une unité d'évaluation (6), conçue pour collecter et pour évaluer les paramètres d'état détectés par ledit élément de mesure (2, 3, 4) et fournis en tant que données de mesure,
- un module de communication (5), destiné à transmettre lesdites données de mesure à l'unité d'évaluation (6),
- et une plate-forme (10) d'informatique dématérialisée, à laquelle ladite unité d'évaluation (6) peut être raccordée si besoin est,
l'unité d'évaluation (6) étant agencée de telle sorte qu'elle établisse un rapprochement des données de mesure, émanant du module de communication (5), avec des données provenant de la plate-forme (10) d'informatique dématérialisée, voire les complète par de telles données, qu'elle les évalue, et délivre les résultats en tant qu'informations, et/ou qu'elle fasse évaluer lesdites données de mesure dans ladite plate-forme (10) d'informatique dématérialisée, et délivre les résultats en tant qu'informations,
sachant que l'élément de mesure (2, 3, 4), à présence minimale, est prévu pour détecter des paramètres d'état qui exercent une influence sur la longévité de la pièce structurelle mobile (1, 15, 24), tels que des cycles de service accomplis par ladite pièce structurelle mobile, des mouvements de types autres, des crêtes de pression, des charges vibratoires, des contraintes thermiques et considérations similaires, et sachant que l'unité d'évaluation (6) convertit les données de mesure reçues en des équivalents de détérioration, additionne ces derniers, et calcule un pronostic relatif à la durée de vie restante de ladite pièce structurelle mobile, en effectuant un rapprochement avec des données provenant de la plate-forme (10) d'informatique dématérialisée, voire en les complétant par de telles données, notamment par rapprochement avec des données de calcul standard de normes pertinentes et/ou de collections de données empiriques, puis délivre ledit pronostic en tant que résultat.

2. Système de surveillance selon la revendication 1, dans lequel l'unité d'évaluation (6) est agencée de façon telle qu'elle rapporte les données de mesure et/ou les résultats à la plate-forme (10) d'informatique dématérialisée.

3. Système de surveillance selon l'une des revendications 1 ou 2, dans lequel la pièce structurelle mobile est un élément flexible de conduite (1) comportant au moins un tronçon en une tubulure métallique (11) ondulée et/ou enroulée et/ou constituée par des segments emboîtés les uns dans les autres avec mobilité, et est munie, de part et d'autre, d'organes de raccordement (12) et/ou de brides en vue de l'intégration dans la conduite canalisant des fluides.

4. Système de surveillance selon l'une des revendications 1 ou 2, dans lequel la pièce structurelle mobile est une suspension (15) ou un appui (24) de longueur variable et/ou apte à se mouvoir angulairement et/ou axialement et/ou latéralement, destiné(e) à la conduite dédiée à des fluides.

5. Système de surveillance selon au moins l'une des revendications 1 à 3, dans lequel l'élément flexible de conduite (1) est intégré, dans une installation industrielle, dans une tuyauterie fixe dévolue au passage de fluides, et est notamment conçu comme un compensateur.

6. Système de surveillance selon au moins l'une des revendications 1 à 5, lequel système inclut une pluralité de pièces structurelles mobiles (1, 15, 24).

7. Système de surveillance selon au moins l'une des revendications 1 à 6, dans lequel le module de communication (5) est un émetteur ou un émetteur-récepteur affecté à la transmission, sans fil, des données de mesure à l'unité d'évaluation (6).

8. Système de surveillance selon au moins l'une des revendications 1 à 7, dans lequel l'unité d'évaluation (6) est agencée de telle sorte que, lorsqu'elle constate une surcharge ou un dysfonctionnement de la pièce structurelle mobile consécutivement à un rapprochement des données de mesure avec des données provenant de la plate-forme (10) d'informatique dématérialisée, elle en rende compte en délivrant une mise en garde.

9. Système de surveillance selon au moins l'une des revendications 1 à 8, dans lequel l'unité d'évaluation (6) délivre les résultats et/ou les mises en garde à un portail *Internet* ou *Intranet,* et/ou à un terminal mobile.

10. Système de surveillance selon au moins l'une des revendications 1 à 9, dans lequel l'unité d'évaluation (6) délivre les résultats et/ou les mises en garde à une commande d'une installation dans laquelle ledit système de surveillance est mis en œuvre.

11. Système de surveillance selon au moins l'une des revendications 1 à 10, dans lequel, sur la base de données de mesure d'une pièce structurelle mobile, enregistrées pour l'essentiel jusqu'au remplacement de ladite pièce, l'unité d'évaluation (6) et/ou la plate-forme (10) d'informatique dématérialisée effectue(nt) une analyse des conditions aux limites données et des états de fonctionnement révolus, pour cette pièce structurelle mobile, et délivre(nt) des indications stipulant des propriétés de ladite pièce structurelle mobile qui nécessitent une amélioration, et des propriétés qui ne sont pas nécessaires.

12. Système de surveillance selon au moins l'une des revendications 1 à 11, dans lequel, en se fondant sur des données de mesure d'une pièce structurelle mobile, enregistrées pour l'essentiel jusqu'au remplacement de ladite pièce, l'unité d'évaluation (6) et/ou la plate-forme (10) d'informatique dématérialisée effectue(nt) une analyse des conditions aux limites données et des états de fonctionnement révolus, pour cette pièce structurelle mobile, et calcule(nt), sur cette base, une spécification des propriétés requises d'une pièce de rechange.

13. Système de surveillance selon au moins l'une des revendications 1 à 12, dans lequel la plate-forme (10) d'informatique dématérialisée est fournie chez le fabricant de la pièce structurelle mobile et l'unité d'évaluation (6) communique, par *Internet (9),* avec ladite plate-forme (10) d'informatique dématérialisée.

14. Système de surveillance selon la revendication 13, dans lequel la plate-forme (10) d'informatique dématérialisée utilise, en tant que données d'essais sur le terrain, les données de mesure émanant d'une pluralité de pièces structurelles mobiles et les résultats produits sur cette base par l'unité d'évaluation (6) et, en se fondant sur des calculs statistiques, elle calcule des valeurs correctrices pour la conception de pièces structurelles mobiles à fabriquer dans le futur.
